# EUROPEAN PATENT SPECIFICATION

(11) **EP 1 379 437 B1**
(45) Date of publication and mention of the grant of the patent: **30.05.2007**
(21) Application number: 02700037.1
(22) Date of filing: 27.02.2002
(51) Int. Cl.: B65B 57/00, B65B 25/06, B65B 43/42, B65G 47/51, B65G 47/10, B65G 47/52, A22C 18/00, A22C 21/00

(54) **MATERIAL HANDLING SYSTEM AND METHOD FOR PRODUCTS MANUALLY PROCESSED**
MATERIALFLUSSSYSTEM UND -VERFAHREN FÜR MANUELL VERARBEITETE PRODUKTE
SYSTEME ET PROCEDE DE MANIPULATION DE MATERIEL POUR PRODUITS TRAITES MANUELLEMENT

(30) Priority: 27.02.2001 AU PR340301
(43) Date of publication of application: 14.01.2004
(73) Proprietor: P & G Developments Pty. Limited, West Footscray, VIC 3012 (AU)
(72) Inventor: JACOBSEN, Glenn, West Footscray, Victoria 3012 (AU); MATKOVICH, Mario, Williamstown, Victoria 3016 (AU)
(74) Representative: Schmidt, Steffen J.
(86) International application number: PCT/AU2002/000213
(87) International publication number: WO 2002/068272

(56) References cited:
- EP-A1- 0 945 350
- EP-B- 0 342 825
- WO-A-98/14370
- FR-A- 2 737 699
- US-A- 4 375 855
- PATENT ABSTRACTS OF JAPAN & JP 2000 210625 A (MAKI MFG CO LTD) 02 August 2000
- PATENT ABSTRACTS OF JAPAN & JP 61 015 266 A 23 January 1986
- DATABASE WPI Week 199731, Derwent Publications Ltd., London, GB; Class D13, AN 1997-335685, XP002977335 & IE 72 461 B2 (CHIBERS IRELAND R & D LTD) 09 April 1997

## Description

### Technical Field

The present invention relates generally to a material handling system and method, and more particularly to a material handling system and method for a product to be manually processed by an operator at a work-station.

The present invention has particular application to the food processing industry and, specifically, to the handling and processing of meat and poultry prior to packaging for supermarket shelves. It will therefore be convenient to hereafter describe the invention in this context. It should be appreciated, however, that the invention is not limited to use within the food processing industry, but that it may also be suitable for use in the handling and processing of a variety of other products.

### Background to the Invention

Cuts of meat and poultry, such as pork, lamb, beef and chicken, are typically sold as pre-packaged items in supermarkets. These pre-packaged cuts are usually supplied to the supermarkets by meat and poultry processing and packaging specialists. To date, the preparation of those packages has been very labour intensive, not only in the necessary manual operations of trimming and cutting larger meat portions to achieve the desired steaks, fillets and other cuts, but also in handling of the product and packaging both before and after the trimming and cutting operations.

An example of one meat-packing system is given in WO 98/14370 which discloses a meat-packing system having a conveyor for bringing carcasses to a boning station, a conveyor cabinet for passing cuts to a trimming station, and a common conveyor for passing trimmed cuts to a bagging station. The system allows for product tracking but is complex and distributed. FR 2737699 discloses another meat-packing system, whilst US 4375855 discloses a transportable processing house such as a cabbage packing house.

The present invention aims to provide an integrated material handling system and method to improve the efficiency and economy of the overall packaging and production process.

### Summary of the Invention

According to one aspect, the present invention provides a material handling system for a product to be manually processed, characterised in that the system includes:
at least one operator workstation at which an operator both processes and packages the product;
computer-controlled batch delivery means, including means for sensing or identifying when a batch of product is required at said operator workstation and means for automatically delivering batches of the product to said operator work-station on an "as required" or "on demand" basis for manual processing by the operator; and
computer-controlled packing container delivery means, including means for sensing or identifying when a packing container is required at said work-station and means for automatically delivering individual packing containers to said operator work-station on an "as required" or "on demand" basis for filling with the product after manual processing by the operator.

Each batch of product is preferably provided in a batch container, and the batch delivery means preferably includes a shuttle device for transporting a batch container from a product supply station to the work-station when it is identified as requiring the product batch. The means for sensing or identifying when a batch of product is required at the work-station may be an optical or physical sensor for detecting the presence (or absence) of a batch container at the work-station. The batch delivery means also preferably includes a mechanism for transferring the batch container from the shuttle device to an access position for the operator at the work-station.

The packing container delivery means preferably includes means for guiding delivery of the packing containers to a filling position at the operator work-stations. In the filling position, the packing container is located where the operator can fill it with the product (eg cuts of meat or poultry) after that product has been manually processed (eg trimmed and cut). The means for sensing or identifying when a packing container is required at the work-station may be an optical or physical sensor for detecting the presence (or absence) of a packing container at the filling position.

In a preferred embodiment of the invention, the material handling system further includes packing container dispatch means for automatically dispatching product-filled packing containers from the work-station on an "as required" or "on demand" basis. The packing container dispatch means includes a mechanism to remove the product-filled packing container from the filling position at the work-station, and an actuator device for use by the operator to actuate the removal mechanism when the operator decides the filled packing container is ready for dispatch. A packing container is typically ready for dispatch when the operator considers that enough product has been placed in it. The removal mechanism of the packing container dispatch means is preferably adapted to discharge the product-filled packing container to a conveyor for carrying that container to a final packaging station.

In a preferred embodiment of the invention, the material handling system includes batch container dispatch means for automatically dispatching the batch containers from the work-station on an "as required" or "on demand" basis. The batch container dispatch means includes a mechanism to remove the batch container from its position at the work-station, and an actuator device for use by the operator to actuate the removal mechanism when that batch container is ready for dispatch. A batch container is typically considered ready for dispatch from its position at the work-station when the operator has emptied it and manually processed all of its product. The mechanism to remove the emptied batch container from the work-station is preferably adapted to transfer that container to a conveyor, which carries it to a batch container return station.

In a preferred embodiment of the invention, the work-station is designed to ergonomically accommodate a human operator working there. The work-station includes a work space in which the product may be manually processed by the operator. This work space preferably takes the form of bench space immediately in front of the operator. The batch delivery means is adapted to deliver the batches of the product to an access position at the work-station within easy reach of the operator, and the packing container delivery means is adapted to deliver the individual packing containers to a filling position at the work-station within easy reach of the operator. The access position to which the batch containers of product are delivered is preferably adjacent to and in front of the work space. The filling position to which the packing containers are delivered is preferably adjacent to, and to one side of, the work space.

In a particularly preferred embodiment of the invention, the work-station is any one of a plurality of separate work-stations belonging to the material handling system. For example, the material handling system of the invention is preferably in the form of a processing line having a plurality of separate operator work-stations, with most of the system conveying and transporting operations occurring along a substantially common, primary line of direction. The work-stations are preferably spaced apart along that primary line, and they may be located either on one side of, or alternatively, on both sides of, that line.

The material handling system of the present invention is desirably modular in nature. Accordingly, with little modification, the system can be adapted from just one or two work-stations to twelve, eighteen or even more.

The "as required" or "on demand" feature of the present invention assists in the optimisation of operation of the system. This feature facilitates almost continuous manual processing (eg trimming and cutting) by the operators at the work-stations, and eliminates timing consuming manual handling of batch containers and/or packing containers. The system of the invention also has the major advantage of facilitating precise tracking of meat and poultry product throughout the processing operation. Each individual packing container is traceable to the specific batch container that was in the particular operator access position at the time that packing container was filled, and the batch container lots are themselves traceable to the bulk meat/poultry lots and/or animal carcasses handled by the company.

In a preferred embodiment of the invention, this "as required" or "on demand" feature of the present invention operates in the following way. When an operator actuates the mechanism to remove an empty batch container from the batch access position at the work-station, the batch delivery means senses or identifies that a new batch is required and proceeds to deliver another batch container of product to that work-station when the access position is vacant. The new batch is preferably transported from a product supply station via a shuttle device. Similarly, when an operator actuates the mechanism to remove a product-filled packing container from the filling position at the work-station, the packing container delivery means senses or identifies that a new packing container is required and proceeds to deliver another one to the work-station when the filling position is vacant.

To minimise time delays between removal of one batch container or packing container and arrival of the next, the material handling system of the invention preferably provides a batch container buffer and/or a packing container buffer adjacent the work-station. That is, the batch delivery means preferably includes a batch container buffer that holds the next batch container of product in a buffer position adjacent the work-station. This results in the next batch container being ready for deployment or delivery to the operator access position as soon as dispatch of the current batch container is actuated. Furthermore, the packing container delivery means also preferably includes a packing container buffer that holds the next one or more (eg three or four) packing container(s) in another buffer position adjacent the work-station. The next packing container is thereby also ready for delivery to the filling position as soon as dispatch of the current product-filled packing container is actuated. As the batch container buffer or the packing container buffer becomes depleted, the respective batch or packing container delivery means described above re-supplies it.

The material handling system of the invention preferably includes a computer controller for controlling the various automatic operations of the system. For example, the computer controller instructs the batch delivery means to deliver a batch container of product to a particular workstation as required, or instructs the packing container delivery means to deliver one or more packing containers to a particular workstation as required. Similarly, the computer controller instructs the batch container dispatch mechanism to discharge an empty batch container when the batch container dispatch actuator device is activated by the operator; and instructs the packing container dispatch mechanism to discharge a filled packing container when the packing container dispatch actuator device is activated by the operator.

According to another aspect, the present invention provides a material handling method for a product to be processed manually, characterised by the steps of:
providing at least one operator work-station at which an operator both processes and packages the product;
automatically delivering discrete batches of the product to said operator work-station for manual processing by the operator, said batches being delivered on an "as required" or "on demand" basis using a computer-controlled delivery means in accordance with a signal from means at said work-station that senses when a batch of product is required; and
automatically delivering individual packing containers to said operator work-station for filling with product processed by the operator, said packing containers being delivered on an "as required" or "on demand" basis in accordance with a signal from means at said work-station that determines when a packing container is required.

In a preferred embodiment of the invention, the material handling method further includes the step of automatically dispatching each product-filled packing container from the work-station on an "as required" or "on demand" basis.

In a preferred embodiment of the invention, each batch of product is supplied in a batch container and the method further includes the step of automatically dispatching the batch container from the work-station on an "as required" or "on demand" basis.

For assistance in arriving at an understanding of the inventive concepts above, a preferred embodiment of the material handling system and method of the present invention is hereafter described with reference to the accompanying drawings. The preceding description of the system and apparatus may also be read with reference to those drawings. However, as the drawings illustrate one example only, their particularity is not to be understood as superseding the generality of the preceding description.

### Brief Description of the Drawings

Fig. 1 is a plan view of a material handling system according to the invention in the form of a processing and/or production line;
Fig. 2 is a side elevation of the material handling system in Fig. 1 showing details of the system at a work-station; and
Fig. 3 is a detailed end view of that part of the packing container dispatch means identified as "A" in Fig. 2.

### Detailed Description of the Preferred Embodiment

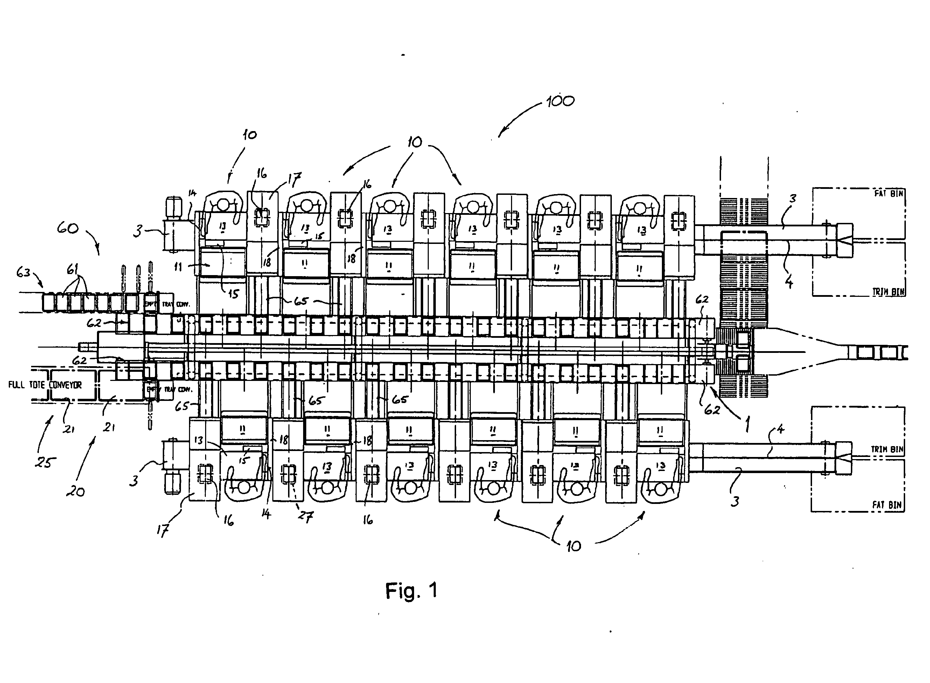

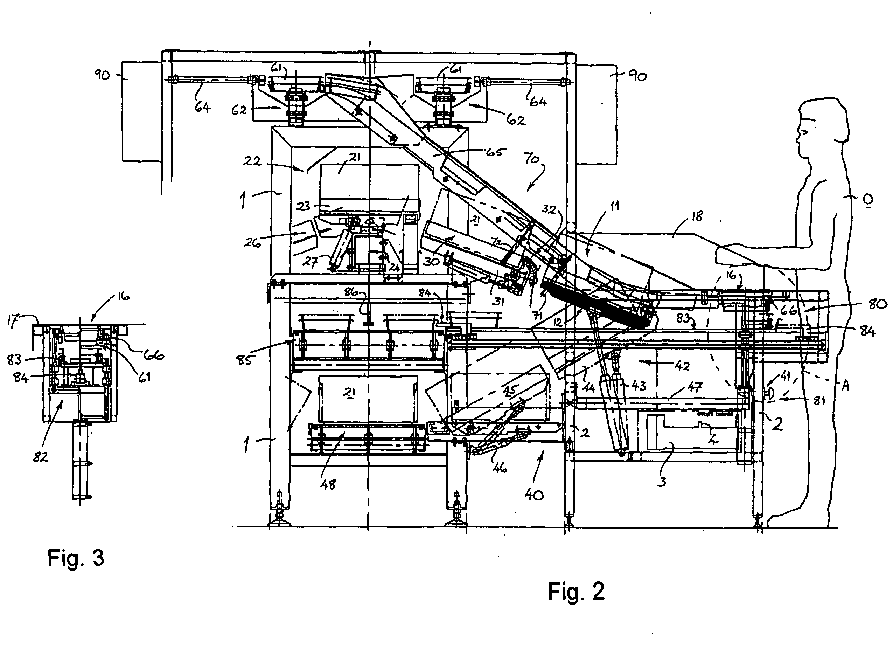

With reference to Fig. 1 and Fig. 2, the particular example of the material handling system illustrated is a processing line 100, along which portions of meat and poultry are manually trimmed and cut by operators O at a plurality of work-stations 10. The operators then place the resultant cuts of meat in packing containers, typically trays, destined for the shelves of supermarkets.

The processing line 100 includes a central frame 1, which supports the primary conveying or transport mechanisms of the system. The frame 1 extends generally longitudinally of the processing line and the operator work-stations 10 are positioned next to one another along the length of the frame 1 and at each of its opposite sides. In this example, the material handling system of the invention has twelve work-stations 10, with six arranged along either side of the central frame 1. Because each of the work-stations in this example is configured and operates essentially identically, it will be convenient to now focus the description of the system at a single work-station, with reference to Figs. 2 and 3.

The material handling system 100 includes a batch delivery means 20 for delivering batches of meat portions to be trimmed and cut to each of the work-stations 10. Each of the batches is provided in a container 21 called a tote crate and the batch delivery means 20 includes a shuttle device 22 for transporting a full tote crate 21 to a work-station 10 identified as requiring a new batch of product for processing. The shuttle device 22 is mounted on the frame 1 and includes a carriage 23, which supports the full tote crate 21 for transport along a linear drive unit 24. The carriage 23 is adapted for travel on the linear drive unit 24 from a supply station 25 to any one of the work-stations 10. The batch delivery means 20 further includes a mechanism 26 for transferring the full tote crate from the carriage 23 to an operator access position 11 at the designated work-station. The access position 11 is directly in front and within easy reach of the operator O at the work-station. The transfer mechanism 26 includes a pneumatic cylinder 27 and is adapted to tilt the carriage 23 to either side of the linear drive unit 24 (as required) so that the tote crate slides off the carriage towards the work-station 10.

The batch delivery means 20 also includes a tote crate buffer 30 adjacent the work-station for holding a full tote crate 21 in reserve, ready for immediate delivery to the operator access position 11 when required. The mechanism 26 actually transfers the full tote crate from the carriage 23 to the buffer 30 as an interim position before reaching the access position 11 at the work-station 10. The tote crate buffer 30 includes a sloped support plate 31 and a removable stop 32 for selectively retaining a tote crate in the buffer. If the access position already has a tote crate, the stop 32 will hold the buffer crate in check. When the tote crate in the access position 11 is removed, the stop 32 is deactivated, eg moved pivotally out of the way, thereby releasing the crate on the buffer support plate 31 to slide into the access position 11 at the work-station.

Importantly, the batch delivery means 20 includes means for sensing or identifying when a new tote crate is required at any one of the work-stations 10, ie when the access position 11 has been vacated. That is, an optical or physical sensor is provided to detect whether or not a tote crate 21 is currently in the access position. This enables the tote crates to be delivered to the work-stations on an "as required" or "on demand" basis. The tote crate 21 in the buffer 30 is available to immediately re-supply the operator at the work-station when the tote crate currently being accessed by the operator is emptied and then removed. The stop 32 is deactivated enabling the tote crate 21 in the buffer 30 to slide off the support plate 31 and into the operator access position 11. At the same time, the batch delivery means 20 is cued to deliver a new full tote crate to the work-station to re-supply the buffer 30, which was depleted to fill the vacant access position 11.

At the access position 11, a tote crate sits on a support plate 12 within easy reach of the work-station operator, positioned at an angle to facilitate access to its contents. The operator typically takes meat portions from the tote crate one at a time, places them on the chopping board 13, cuts off the fat and discards it through an aperture 14 at the side of the board, and slices the portion into fillets, steaks etc. for packing. Any small off-cuts of meat (called trim) are also discarded, but through a separate aperture 15 at the top of the board. Each work-station 10 is mounted or supported on a separate frame 2 laterally spaced from the central frame 1, and the work-station frame 2 supports an off-cuts conveyor 3 which passes beneath each work-station to collect the fat and trim off-cuts discarded through the apertures 14,15. The off-cuts conveyor 3 is longitudinally divided by a partition 4 into a region for fat and a region for trim, and each is carried to a specific collection bin, as shown in Fig. 1. A small partition wall 18 is also provided at each of the work-stations 10 to ensure that no off-cut fat is accidentally 'flicked' from one work-station to another as it is directed to the aperture 14.

Once an operator at a work-station 10 has finished processing all of the meat or poultry portions in the tote crate 21 currently at the access position 11, the operator needs to remove the now empty tote crate and make room for delivery of the next full one. The material handling system 100 therefore also includes a tote crate dispatch means 40 for automatically dispatching the tote crates 21 from the access position 11 on demand or as required. The tote crate dispatch means 40 includes an actuator device 41 for use by the operator to actuate a removal mechanism 42 when the operator has finished processing the entire contents of the current tote crate.

The removal mechanism 42 includes a pneumatic cylinder 43 and is adapted to downwardly pivot the support plate 12, which is hinged to the work-station 10, to a discharge position 44 shown in dashed lines in Fig. 2. In the discharge position 44, the tote crate 21 slides off the support plate 12 and onto the elevated transfer plate 45. The support plate 12 may then return to its original orientation defining the access position 11, ready to receive the next full tote crate from the buffer 30. The transfer plate 45 meanwhile is lowered by a pneumatic mechanism 46 to the horizontal position shown, and a pneumatic ram 47 is provided to push the empty tote crate onto a conveyor 48 adapted to carry the crate to a crate return station (not shown). The conveyor 48 is preferably divided or partitioned into a plurality of discrete crate-carrying segments, and the pneumatic ram device 47 is desirably controlled to delay advancing the crate onto the conveyor 48 until such time as the segment of the conveyor passing the crate is free or available, ie not already occupied.

The system 100 of the invention also includes a packing tray delivery means 60 for automatically delivering individual packing trays 61 to each work-station 10 identified as requiring another tray. The packing tray delivery means 60 includes conveyor means in the form of two separate belt conveyors 62 mounted on top of the frame 1. Each of the belt conveyors 62 transports packing trays 61 from a tray supply station 63 along the processing line to the work-stations 10, and each belt conveyor services the work-stations 10 on one side of the line 100. At each of the work-stations, the packing tray delivery means 60 further includes a feed ram 64 (again preferably pneumatically driven) and a chute or ramp 65 for guiding delivery of the packing trays 61 from the respective belt conveyor 62 to a filling position 16 at each work-station.

When the filling position 16 at a work-station is unoccupied, a packing tray slides down the guide chute 65 and, assisted by carefully directed air jets, glides into a movable tray caddy 66 aligned with the chute at the work-station 10. The caddy 66 then lifts the new tray 61 into the filling position 16. At the filling position 16, the packing tray is positioned with its open top facing up and is accessible through an aperture in a cover plate 17 adjacent to the chopping board 13 at the work-station. An outwardly projecting flange-type rim 67 of the tray is pressed against the underside of the cover plate 17 when the caddy 66 raises the tray into position. This not only firmly secures the tray in the filling position, but also keeps the rim hidden or covered, thereby keeping it clean for sealing with a film layer in a later, final packaging step. At the filling position 16, the tray 61 is within easy reach to one side of the work-station operator and, after trimming and cutting the meat portions taken from the tote crate in the access position, the operator places the fillets, steaks or other cuts of meat and poultry within the empty tray.

The packing tray delivery means 60 also includes a packing tray buffer 70 for holding a number of packing trays in reserve, ready for immediate delivery to the filling position 16 when required. The feed ram 64 actually feeds the packing trays 61 into the buffer 70, which is located on the guide chute 65. The buffer 70 in this particular case holds four packing trays 61, with the first buffer tray isolated from the filling position by a first tray stop 71, and from the other trays in the buffer 70 by a second tray stop 72. In this example the tray stops 71,72 are retractable rod-like elements which project upwardly from below the chute or ramp 65 to engage a front of the trays and thereby prevent their further progress towards the filling position. Each of the tray stops 71,72 may be deactivated or retracted to prevent their interference with the trays.

The packing tray delivery means 60 furthermore includes means for sensing or identifying when a packing tray is required at one of the work-stations, ie when the filling position 16 has been vacated. That is, a sensor (optical or physical) is provided to detect whether or not a packing tray 61 is currently in the filling position 16. This enables the packing trays to be delivered to the work-stations as required or on demand. The packing trays in the buffer 70 are available to immediately re-supply the operator at the work-station when the tray currently being filled by the operator is removed from the filling position. When the filling position is identified as empty, and therefore as requiring a new packing tray, the first tray stop 71 is deactivated (ie retracted) enabling the first packing tray in the buffer 70 to slide down the guide chute 65 and into the caddy 66 to be raised into the operator filling position 16. The first tray stop 71 is then reactivated and the second tray stop 72 deactivated, enabling the packing tray previously in the second buffer position to move forward into the first buffer position. The second tray stop 72 is then also reactivated to again isolate what is now the first buffer packing tray from the other trays 61 in the buffer 70. At the same time, the packing tray delivery means 60 is cued to deliver a new empty packing tray 61 from the belt conveyor 62 to re-supply the buffer 70, which was depleted to supply the vacant filling position 16.

As an operator at a work-station cuts and trims the meat and/or poultry portions from the tote crate 21 in the access position, the resultant choice cuts are placed in the packing tray 61 at the filling position 16. Naturally, each packing tray will only contain one or two, or perhaps three, separate cuts, so each packing tray will be filled and require replacement relatively quickly. For example, for each single tote crate of product processed by the operator, many separate packing trays will be required. The system of the invention therefore also includes a packing tray dispatch means 80 for automatically dispatching product-filled packing trays from the work-station on demand or as required. The packing tray dispatch means 80 includes an actuator device 81 for use by the operator to actuate a removal mechanism 82 adapted to automatically remove a product-filled packing tray 61 from the filling position 16 when the operator considers that enough product has been placed in it.

The removal mechanism 82 is illustrated in Figs. 2 and 3 and is adapted to lower the packing tray caddy 66 and deposit the filled tray on a transit surface 83 directly below the filling position 16. The removal mechanism 82 further includes a pusher 84, which is designed to engage the tray at this location and drive it out of the caddy 66 and along the transit surface 83 towards a conveyor 85 mounted on the central frame 1. The packing tray caddy 66 is then free to return to its initial position in alignment with the guide chute or ramp 65 to receive a new packing tray 61 from the tray buffer 70. The conveyor 85 is arranged to carry the filled tray to a final packaging station (not shown) where a film covering will be applied to the upper rim of the tray and the product will be weighed and priced. Like conveyor 48, the conveyor 85 is preferably divided or partitioned into a plurality of discrete tray-carrying segments, and the pusher 84 is desirably controlled to pause or delay actually advancing the tray onto the conveyor until the segment of the conveyor passing the tray is free or available, ie not already occupied. Furthermore, the conveyor 85 is divided longitudinally by partition 86 so that use of a single conveyor can be maximised by the work-stations at either side of the central frame 1.

In operation, the processing line 100 enables the operators at the work-stations to devote their time almost exclusively to the task of manually processing the meat and poultry delivered to the work-stations. Tote crates full of product to be processed are delivered automatically when a work-station is identified a requiring one, and the operator actuates the tote crate's automatic dispatch (by pressing a knee-activated button 41, for example) when all of the product it contained has been processed. This actuation itself may serve as the control system trigger for sensing or detecting when a new batch crate of product should be delivered to that work-station. Similarly, packing trays to be filled by the operators are also automatically delivered one at a time to the work-station when the work-station is identified a requiring one. And the operator actuates each packing tray's automatic dispatch (again, for example, by pressing a knee-activated button 81) when the operator considers it has been sufficiently filled. This actuation may also serve as the control system trigger for sensing or detecting when a new packing tray should be delivered to that work-station.

Since the delivery and dispatch of product both before and after processing is automatically controlled, the system of the invention lends itself to monitoring or tracking the passage of product throughout the system. Each packing tray filled and dispatched can be traced to a particular work-station and the particular tote crate from which the meat or poultry came. And the tote crates can themselves be traced to a particular bulk meat or poultry lot and/or animal carcass handled by the processing and packaging company.

The processing line 100 includes a computer controller (not shown) for controlling all of the automatic operations of the system. For example, the computer controller instructs the shuttle device 22 to deliver a tote crate 21 of product to a particular work-station or buffer 30 as required, or instructs a particular feed ram 64 to deliver one or more packing trays 61 into a guide chute 65 to supply a particular work-station as required. Similarly, the computer controller instructs the tote crate removal mechanism 42 to discharge an empty tote crate 21 when the actuator button 41 is activated by the operator; and instructs the packing tray removal mechanism 82 to discharge a filled packing tray 61 when the actuator button 81 is activated by the operator.

The computer controller functions as a virtual "nerve centre" for the entire material handling system of the invention. In addition to controlling the routine operations for normal running of the machine, it preferably enables each of the plurality of work-stations to be individually switched on or off, ie to be brought on-line or off-line within the handling system. It is able to control the automatic emptying of all batch containers and/or packaging containers (whether full or empty) from the system, to enable a change of either. It also preferably enables a problem analysis to be carried out at any one or more of the work-stations in the event of a processing problem.

Another major advantage of the computer controller is its usefulness in tracking tote crates 21 and packing trays 61 throughout the processing line 100. This can have very significant benefits for quality assurance in the material handling system. The system of the invention not only enables tracking and recording of which tote crates 21 of meat or poultry were processed at which work-station 10, but also of which packing trays 61 were filled from which tote crates. It is also possible to monitor and record which operator worked at a particular work-station and handled the contents of particular packing trays. Accordingly, a thorough record of the meat in each tray and who it was handled by can be maintained.

The processing line 100 described is preferably fabricated substantially entirely from stainless steel since it will need to be washed-down once every day to ensure sanitary standards are maintained. The electric and electronic power and control systems built into the material handling system of the invention will desirably be fully housed within water-tight enclosures for their protection. For example, elevated casings 90 shown in Fig. 2 may house the electric and electronic power and control systems. The computer controller desirably has a cleaning mode in which it ensures positive pressurisation of all the pneumatic cylinders to prevent ingress of water during washing of the processing line.

Finally, it will be understood that various modifications and/or additions may be made to the system and method described above without departing from the ambit of the present invention as defined in the appended claims.

## Claims

1. A material handling system (100) for a product to be manually processed, **characterised in that** the system includes:
at least one operator workstation (10) at which an operator both processes and packages the product;
computer-controlled batch delivery means (20), including means for sensing or identifying when a batch of product is required at said operator workstation (10) and means for automatically delivering batches of the product to said operator work-station (10) on an "as required" or "on demand" basis for manual processing by the operator; and
computer-controlled packing container delivery means (60), including means for sensing or identifying when a packing container (61) is required at said work-station (10) and means for automatically delivering individual packing containers (61) to said operator work-station (10) on an "as required" or "on demand" basis for filling with the product after manual processing by the operator.

2. A material handling system according to claim 1, wherein each batch of product is provided in a batch container (21), and the batch delivery means (20) includes a shuttle device (22) for transporting one of the batch containers (21) from a product supply station (25) to the work-station (10) when the work-station (10) is identified as requiring the product batch.

3. A material handling system according to claim 2, wherein the batch delivery means (20) includes a mechanism (26) for transferring the batch container (21) from the shuttle device (22) to an access position (11) for the operator at the work-station (10).

4. A material handling system according to claim 3, wherein the batch delivery means (20) includes a batch container buffer (30) for accommodating a batch container (21) of product adjacent the work-station (10).

5. A material handling system according to any preceding claim, wherein the packing container delivery means (60) includes guide means (65) for directing delivery of the packing containers (61) to a filling position (16) at each of the operator work-stations (10).

6. A material handling system according to claim 5, wherein the guide means (65) is in the form of a chute that extends from a packing container conveyor (62) to the work-station (10).

7. A material handling system according to any preceding claim, wherein the packing container delivery means (60) includes a packing container buffer (70) for accommodating a plurality of packing containers (61) adjacent the work-station (10).

8. A material handling system according to claim 6 and 7, wherein the packing container buffer (70) is provided in the guide chute (65).

9. A material handling system according to any one of the preceding claims, wherein the work-station (10) is designed to ergonomically accommodate a human operator and includes a work space (13) in which the product may be manually processed by the operator, the batch delivery means (20) being adapted to deliver the batches of the product to an access position (11) at the work-station (10) within easy reach of the operator, and the packing container delivery means (60) being adapted to deliver the individual packing containers (61) to a filling position (16) at the work-station (10) within easy reach of the operator.

10. A material handling system according to claim 9, wherein the work space (13) takes the form of bench space immediately in front of the operator, and wherein the access position (11) to which batches of product are delivered is adjacent to and in front of the work space (13) within easy reach of the operator, and the filling position (16) to which the packing containers (61) are delivered is adjacent and to one side of the work space (13) where the operator can fill it with the product after that product has been manually processed.

11. A material handling system according to any one of the preceding claims, further including packing container dispatch means (80) for automatically dispatching product-filled packing containers (61) from the work-station (10) on an "as required" or "on demand" basis.

12. A material handling system according to claim 11, wherein the packing container dispatch means (80) includes a mechanism (82) to remove a product-filled packing container (61) from a filling position (16) at the work-station (10) and an actuator device (81) for use by the operator to actuate the removal mechanism (82) when that filled packing container (61) is ready for dispatch.

13. A material handling system according to claim 14, wherein the removal mechanism (82) of the packing container dispatch means (80) is adapted to discharge the product-filled packing container (61) to a conveyor (85) for carrying that container (61) to a final packaging station.

14. A material handling system according to any one of the preceding claims, further including batch container dispatch means (40) for automatically dispatching batch containers (21) from each work-station (10) on an "as required" or "on demand" basis.

15. A material handling system according to claim 14, wherein the batch container dispatch means (40) includes a mechanism (42) to remove the batch container (21) from an access position (11) at the work-station (10), and an actuator device (41) for use by the operator to actuate the removal mechanism (42) when that batch container (21) is ready for dispatch.

16. A material handling system according to claim 15, wherein the mechanism (42) to remove an emptied batch container (21) from the access position (11) is adapted to transfer that container (21) to a conveyor (48), which is able to carry it to a batch container return station.

17. A material handling system according to any one of the preceding claims, further including a computer controller for controlling the various automatic operations of the system.

18. A material handling system according to any one of the preceding claims, wherein said operator work-station (10) is any one of a plurality of separate operator work-stations (10) belonging to the material handling system.

19. A material handling system according to any one of the preceding claims, wherein the material handling system is in the form of a processing line (100) having a plurality of separate operator work-stations (10), said processing line having most of the system conveying and transporting operations occurring along a substantially common, primary line of direction.

20. A material handling system according to claim 19, wherein the operator work-stations (10) are spaced apart along the processing line (100) with the work-stations (10) located on both sides of that line.

21. A material handling system according to any one of the preceding claims, wherein the material handling system is in the form of a processing line (100) having a plurality of separate operator work-stations (10) provided therealong, the processing line (100) including a plurality of transport mechanisms (26, 48, 62, 85) mounted one above another along its length, the transport mechanisms including at least one transport mechanism (26) for delivery of batches of product to said operator work-stations (10), and a transport mechanism (62) for delivery of packing containers (61) to said operator work-stations (10).

22. A material handling system according to any one of the preceding claims, wherein said operator work-station (10) includes an apertured cover plate (17), and wherein individual packing containers (61) are delivered to said operator work-station (10) below said cover plate (17), so that an operator can fill a said delivered container (61) through the cover plate aperture, a rim (67) of said container (61) pressing against said cover plate (17) about the periphery of said aperture.

23. A material handling system according to any one of the preceding claims, wherein said material handling system is a food handling system.

24. A material handling method for a product to be processed manually, **characterised by** the steps of:
providing at least one operator work-station (10) at which an operator both processes and packages the product;
automatically delivering discrete batches (21) of the product to said operator work-station (10) for manual processing by the operator, said batches being delivered on an "as required" or "on demand" basis using a computer-controlled delivery means in accordance with a signal from means at said work-station that senses when a batch of product is required; and
automatically delivering individual packing containers (61) to said operator work-station (10) for filling with product processed by the operator, said packing containers being delivered on an "as required" or "on demand" basis in accordance with a signal from means at said work-station that determines when a packing container is required.

25. A material handling method according to claim 24, further including the step of automatically dispatching each product-filled packing container (61) from the work-station on an "as required" or "on demand" basis.

26. A material handling method according to claim 24 or claim 25, wherein each batch of product is supplied in a batch container (21) and the method further includes the step of automatically dispatching the batch container from the work-station on an "as required" or "on demand" basis.

## Patentansprüche

1. Materialflusssystem (100) für ein manuell zu verarbeitendes Produkt, **dadurch gekennzeichnet, dass** das System umfasst:
mindestens einen Bedienperson-Arbeitsplatz (10), an dem eine Bedienperson das Produkt sowohl verarbeitet als auch verpackt;
eine computergesteuerte Chargezufuhreinrichtung (20), die eine Einrichtung zum Erfassen oder Anzeigen, wenn eine Produktcharge an dem Bedienperson-Arbeitsplatz (10) benötigt wird, sowie eine Einrichtung zum automatischen Zuführen von Produktchargen "nach Bedarf' oder "auf Verlangen" an den Bedienperson-Arbeitsplatz zum manuellen Verarbeiten durch die Bedienperson umfasst; und
eine computergesteuerte Packbehälterzufuhreinrichtung (60), die eine Einrichtung zum Erfassen oder Anzeigen, wenn ein Packbehälter (61) an dem Arbeitsplatz (10) benötigt wird, und eine Einrichtung zum automatischen Zuführen einzelner Packbehälter (61) "nach Bedarf' oder "auf Verlangen" an den Bedienperson-Arbeitsplatz (10) zum Füllen mit dem Produkt nach der manuellen Verarbeitung durch die Bedienperson umfasst.

2. Materialflusssystem nach Anspruch 1, bei dem jede Produktcharge in einem Chargebehälter (21) bereitgestellt wird, und die Chargezufuhreinrichtung (20) eine Transportvorrichtung (22) zum Transportieren eines der Chargebehälter (21) von einer Produktlieferstation (25) an den Arbeitsplatz (10) umfasst, wenn die Arbeitsstation (10) als die Produktcharge benötigend angezeigt worden ist.

3. Materialflusssystem nach Anspruch 2, bei dem die Chargezufuhreinrichtung (20) einen Mechanismus (26) umfasst zum Weiterführen des Chargebehälters (21) von der Transportvorrichtung (22) zu einer Zugangsposition (11) für die Bedienperson an dem Arbeitsplatz (10).

4. Materialflusssystem nach Anspruch 3, bei dem die Chargezufuhreinrichtung (20) eine Chargebehälterreserve (30) umfasst zum Unterbringen eines Chargebehälters (21) des Produkts benachbart der Arbeitsstation (10).

5. Materialflusssystem nach einem der vorhergehenden Ansprüche, bei dem die Packbehälterzufuhreinrichtung (60) eine Führungseinrichtung (65) umfasst, die das Zuführen der Packbehälter (61) zu einer Füllposition (16) an jeder der Bedienperson-Arbeitsstationen (10) lenkt.

6. Materialflusssystem nach Anspruch 5, bei dem die Führungseinrichtung (65) eine Rinne ist, die von einem Packbehälterförderband (62) zu der Arbeitsstation (10) verläuft.

7. Materialflusssystem nach einem der vorhergehenden Ansprüche, bei dem die Packbehälterzufuhreinrichtung (60) eine Packbehälterreserve (70) umfasst zum Unterbringen einer Vielzahl von Packbehältern (61) benachbart der Arbeitsstation (10).

8. Materialflusssystem nach Anspruch 6 und 7, bei dem die Packbehälterreserve (70) in der Führungsrinne (65) vorgesehen ist.

9. Materialflusssystem nach einem der vorhergehenden Ansprüche, bei dem die Arbeitsstation (10) derart ausgestaltet ist, dass sie auf ergonomische Weise einer menschlichen Bedienperson Platz bietet und einen Arbeitsbereich (13) umfasst, in dem das Produkt manuell von der Bedienperson verarbeitet werden kann, wobei die Chargezufuhreinrichtung (20) dafür eingerichtet ist, die Produktcharge in eine Zugangsposition (11) an dem Arbeitsplatz (10) innerhalb Griffnähe der Bedienperson zu bewegen, und wobei die Packbehälterzufuhreinrichtung (60) dafür angepasst ist, die einzelnen Packbehälter (61) zu einer Füllposition (16) an der Arbeitsstation (10) innerhalb Griffnähe der Bedienperson zu bewegen.

10. Materialflusssystem nach Anspruch 9, bei der der Arbeitsbereich (13) die Form eines Tisches unmittelbar vor der Bedienperson aufweist, und wobei die Zugangsposition (11), in die die Produktcharge bewegt wird, sich benachbart und vor dem Arbeitsbereich (13) innerhalb Griffnähe der Bedienperson befindet, und wobei die Füllposition (16), in die die Packbehälter (61) bewegt werden, sich benachbart und seitlich des Arbeitsbereichs (13) befindet, in der die Bedienperson diese mit dem Produkt füllen kann, nachdem das Produkt manuell verarbeitet worden ist.

11. Materialflusssystem nach einem der vorhergehenden Ansprüche, des Weiteren umfassend eine Packbehälterabgabeeinrichtung (80) zum automatischen Abgeben der produktgefüllten Packbehälter (61) "nach Bedarf" oder "auf Verlangen" von der Arbeitsstation (10).

12. Materialflusssystem nach Anspruch 11, bei dem die Packbehälterabgabeeinrichtung (80) einen Mechanismus (82), der einen produktgefüllten Packbehälter (61) von einer Füllposition (16) an der Arbeitsstation (10) entnimmt, und eine Betätigungsvorrichtung (81) umfasst, die von der Bedienperson bedient wird, um den Entnahmemechanismus (82) zu betätigen, wenn der gefüllte Packbehälter (61) zur Abgabe bereitsteht.

13. Materialflusssystem nach Anspruch 12, bei dem der Entnahmemechanismus (82) der Packbehälterabgabeeinrichtung (80) dafür eingerichtet ist, den produktgefüllten Packbehälter (61) an ein Förderband (85) weiterzugeben, um den Behälter (61) zu einer letzten Verpackungsstation zu transportieren.

14. Materialflusssystem nach einem der vorhergehenden Ansprüche, ferner umfassend eine Chargebehälterabgabeeinrichtung (40) zum automatischen Abgeben der Packbehälter (21) "nach Bedarf" oder "auf Verlangen" von jeder Arbeitsstation (10).

15. Materialflusssystem nach Anspruch 14, bei dem die Chargebehälterabgabeeinrichtung (40) einen Mechanismus (42), die den Chargebehälter (21) von einer Zugangsposition (11) an dem Arbeitsplatz (10) entnimmt, und eine Betätigungsvorrichtung (41) umfasst, die von der Bedienperson bedient wird, um den Entnahmemechanismus (42) zu betätigen, wenn der Chargebehälter (21) zur Abgabe bereitsteht.

16. Materialflusssystem nach Anspruch 15, bei dem der Mechanismus (42), der einen geleerten Chargebehälter (21) von der Zugangsposition (11) entnimmt, dafür angepasst ist, diesen Behälter (21) an ein Förderband (48) weiterzugeben, das in der Lage ist, diesen zu einer Chargebehälter-Rücklaufstation zu befördern.

17. Materialflusssystem nach einem der vorhergehenden Ansprüche, ferner umfassend ein Computersteuergerät zum Steuern der unterschiedlichen automatischen Vorgänge des Systems.

18. Materialflusssystem nach einem der vorhergehenden Ansprüche, bei dem die Bedienperson-Arbeitsstation (10) eine von einer Vielzahl von getrennten Bedienperson-Arbeitsstationen (10) ist, die zu dem Materialflusssystem gehören.

19. Materialflusssystem nach einem der vorhergehenden Ansprüche, bei dem das Materialflusssystem die Form einer Verarbeitungslinie (100) aufweist mit einer Vielzahl von getrennten Bedienperson-Arbeitsstationen (10), wobei die Verarbeitungslinie die meisten der Förder- und Transportvorgänge des Systems aufweist, die im Wesentlichen entlang einer gemeinsamen Hauptrichtung der Linie stattfinden.

20. Materialflusssystem nach Anspruch 19, bei dem die Bedienperson-Arbeitsstationen (10) entlang der Verarbeitungslinie (100) zueinander beabstandet angeordnet sind, und wobei die Arbeitsstationen (10) sich auf beiden Seiten der Linie befinden.

21. Materialflusssystem nach einem der vorhergehenden Ansprüche, bei dem das Materialflusssystem die Form einer Verarbeitungslinie (100) aufweist mit einer Vielzahl von getrennten, entlang dieser vorgesehenen Bedienperson-Arbeitsstationen (10), wobei die Verarbeitungslinie (100) eine Vielzahl von Transportmechanismen (26, 48, 62, 85) umfasst, die entlang ihrer Länge übereinander montiert sind, und wobei die Transportmechanismen zumindest einen Transportmechanismus (26) zum Zuführen von Produktchargen an die Bedienperson-Arbeitsstationen (10) sowie einen Transportmechanismus (62) zum Zuführen von Packbehältern (61) an die Bedienperson-Arbeitsstationen (10) umfassen.

22. Materialflusssystem nach einem der vorhergehenden Ansprüche, bei dem die Bedienperson-Arbeitsstation (10) eine mit einer Öffnung versehene Abdeckplatte (17) umfasst, wobei einzelne Packbehälter (61) unterhalb der Abdeckplatte (17) der Bedienperson-Arbeitsstation (10) zugeführt werden, so dass eine Bedienperson den zugeführten Behälter (61) durch die Öffnung in der Abdeckplatte füllen kann, und wobei ein Rand (67) des Behälters (61) gegen die Abdeckplatte (17) entlang des Öffnungsumfangs drückt.

23. Materialflusssystem nach einem der vorhergehenden Ansprüche, bei dem das Materialflusssystem ein Lebensmitteltransportsystem ist.

24. Materialflussverfahren für ein manuell zu verarbeitendes Produkt, **gekennzeichnet durch** die Schritte:
Bereitstellen mindestens einer Bedienperson-Arbeitsstation (10), an der eine Bedienperson das Produkt sowohl verarbeitet als auch verpackt;
automatisches Zuführen einer einzelnen Charge (21) des Produkts an die Bedienperson-Arbeitsstation (10) zum manuellen Verarbeiten **durch** die Bedienperson, wobei die Charge "nach Bedarf' oder "auf Verlangen" zugeführt wird unter Verwendung einer computergesteuerten Zufuhreinrichtung entsprechend einem Signal von einer Einrichtung an der Arbeitsstation, die den Bedarf einer Produktcharge erfasst; und
automatisches Zuführen einzelner Packbehälter (61) an die Bedienperson-Arbeitsstation (10) zum Füllen mit dem von der Bedienperson verarbeiteten Produkt, wobei die Packbehälter "nach Bedarf" oder "auf Verlangen" zugeführt werden entsprechend einem Signal von einer Einrichtung an der Arbeitsstation, die den Bedarf eines Packbehälters bestimmt.

25. Materialflussverfahren nach Anspruch 24, ferner umfassend den Schritt des automatischen Abgebens eines jeden produktgefüllten Packbehälters (61) von der Arbeitsstation "nach Bedarf" oder "auf Verlangen".

26. Materialflussverfahren nach Anspruch 24 oder 25, bei dem jede Produktcharge in einem Chargebehälter (21) geliefert wird, und das Verfahren ferner den Schritt des automatischen Abgebens des Chargebehälters von der Arbeitsstation "nach Bedarf' oder "auf Verlangen" umfasst.

## Revendications

1. Système (100) de manipulation de matériel pour un produit devant être traité manuellement, **caractérisé en ce que** le système comprend :
au moins un poste (10) de travail d'opérateur auquel un opérateur à la fois traite et emballe le produit ;
un moyen (20) de distribution de lots contrôlé par ordinateur, comprenant un moyen pour capter ou identifier lorsqu'un lot de produit est nécessaire au niveau dudit poste (10) de travail d'opérateur et un moyen pour distribuer automatiquement des lots du produit audit poste (10) de travail d'opérateur sur une base « au besoin » ou « à la demande » pour un traitement manuel par l'opérateur ; et
un moyen (60) de distribution de conteneurs d'emballage contrôlé par ordinateur, comportant un moyen pour détecter ou identifier lorsqu'un conteneur (61) d'emballage est nécessaire au niveau dudit poste (10) de travail et un moyen pour distribuer automatiquement des conteneurs individuels (61) d'emballage audit poste (10) de travail d'opérateur sur une base « au besoin » ou « à la demande » pour remplir le produit après le traitement manuel par l'opérateur.

2. Système de manipulation de matériel selon la revendication 1, dans lequel chaque lot de produit est fourni dans un conteneur (21) de lot, et le moyen (20) de distribution de lot comporte un dispositif (22) de navette pour transporter un des conteneurs (21) de lot à partir d'un poste (25) d'acheminement de produit vers le poste (10) de travail lorsque le poste (10) de travail est identifié tel que nécessitant le lot de produits.

3. Système de manipulation de produit selon la revendication 2, dans lequel le moyen (20) de distribution de lot comprend un mécanisme (26) pour transférer le conteneur (21) de lots à partir du dispositif (22) de navette vers une position (11) d'accès pour l'opérateur au niveau du poste (10) de travail.

4. Système de manipulation de matériel selon la revendication 3, dans lequel le moyen (20) de distribution de lot comprend un tampon (30) de conteneur de lot pour recevoir un conteneur (21) de lot de produit adjacent au poste (10) de travail.

5. Système de manipulation de matériel selon l'une quelconque des revendications précédentes, dans lequel le moyen (60) de distribution de conteneur d'emballage comprend un moyen (65) de guidage pour diriger la distribution des conteneurs (61) d'emballage vers une position (16) de remplissage au niveau de chacun des postes (10) de travail d'opérateur.

6. Système de manipulation de matériel selon la revendication 5, dans lequel le moyen (65) de guidage se trouve sous la forme d'une trémie qui s'étend à partir d'un transporteur (62) de conteneur d'emballage vers le poste (10) de travail.

7. Système de manipulation de matériel selon l'une quelconque revendication précédente, dans lequel le moyen (60) de distribution de conteneur d'emballage comporte un tampon (70) de conteneur d'emballage pour recevoir une pluralité de conteneurs (61) d'emballage adjacents au poste (10) de travail.

8. Système de manipulation de matériel selon la revendication 6 et 7, dans lequel le tampon (70) de conteneur d'emballage est fourni dans la trémie (65) de guidage.

9. Système de manipulation de matériel selon l'une quelconque des revendications précédentes, dans lequel le poste (10) de travail est conçu pour recevoir de façon ergonomique un opérateur humain et comporte un espace (13) de travail dans lequel le produit peut être manuellement traité par l'opérateur, le moyen (20) de distribution de lot étant adapté pour distribuer les lots du produit vers une position (11) d'accès au niveau du poste (10) de travail à la portée immédiate de l'opérateur, et le moyen (60) de distribution de conteneur d'emballage étant adapté pour distribuer les conteneurs individuels (61) d'emballage vers une position (16) de remplissage au niveau du poste (10) de travail à la portée immédiate de l'opérateur.

10. Système de manipulation de matériel selon la revendication 9, dans lequel l'espace (13) de travail prend la forme d'un espace de banc immédiatement devant l'opérateur, et dans lequel la position (11) d'accès à laquelle des lots de produit sont distribués est adjacente à l'espace (13) de travail et devant celui-ci à la portée immédiate de l'opérateur, et la position (16) de remplissage à laquelle les conteneurs (61) d'emballage sont distribués est adjacente à et sur un côté de l'espace (13) de travail où l'opérateur peut le remplir du produit après que ce produit a été manuellement traité.

11. Système de manipulation de matériel selon l'une quelconque des revendications précédentes, comportant en outre un moyen (80) de répartition de conteneur d'emballage pour répartir automatiquement les conteneurs (61) d'emballage remplis de produit à partir du poste (10) de travail sur une base « au besoin » ou « à la demande ».

12. Système de manipulation de matériel selon la revendication 11, dans lequel le moyen (80) de répartition de conteneur d'emballage comporte un mécanisme (82) pour enlever un conteneur (61) d'emballage rempli de produit d'une position (16) de remplissage au niveau du poste (16) de travail et un dispositif (81) de commande pour une utilisation par l'opérateur pour commander le mécanisme (82) d'enlèvement lorsque ce conteneur rempli (61) d'emballage est prêt à être réparti.

13. Système de manipulation de matériel selon la revendication 14, dans lequel le mécanisme (82) d'enlèvement du moyen (80) de répartition de conteneur d'emballage est adapté pour acheminer le conteneur (61) d'emballage rempli de produit vers un transporteur (85) pour transporter ce conteneur (61) vers une station finale d'emballage.

14. Système de manipulation de matériel selon l'une quelconque des revendications précédentes, comportant en outre un moyen (40) de répartition de conteneur de lot pour répartir automatiquement les conteneurs (21) de lot à partir de chaque poste (10) de travail sur une base « au besoin » ou « à la demande ».

15. Système de manipulation de matériel selon la revendication 14, dans lequel le moyen (40) de répartition de conteneur de lot comporte un mécanisme (42) pour enlever le conteneur (21) de lot d'une position (11) d'accès au niveau d'un poste (10) de travail, et un dispositif (41) de commande pour une utilisation par l'opérateur pour commander le mécanisme (42) d'enlèvement lorsque ce conteneur (21) de lot est prêt à être réparti.

16. Système de manipulation de matériel selon la revendication 15, dans lequel le mécanisme (42) pour enlever un conteneur vidé (21) de lot de la position (11) d'accès est adapté pour transférer ce conteneur (21) vers un transporteur (48), qui est capable de le transporter vers une station de retour de conteneur de lot.

17. Système de manipulation de matériel selon l'une quelconque des revendications précédentes, comportant en outre un régulateur informatique pour réguler les diverses opérations automatiques du système.

18. Système de manipulation de matériel selon l'une quelconque des revendications précédentes, dans lequel ledit poste (10) de travail d'opérateur est l'une quelconque d'une pluralité de postes séparée (10) de travail d'opérateur appartenant au système de manipulation de matériel.

19. Système de manipulation de matériel selon l'une quelconque des revendications précédentes, dans lequel le système de manipulation de matériel se trouve sous la forme d'une chaîne (100) de traitement ayant une pluralité de postes séparés (10) de travail d'opérateur, ladite chaîne de traitement ayant une grande partie du système convoyant et transportant des opérations survenant le long d'une ligne primaire sensiblement commune de direction.

20. Système de manipulation de matériel selon la revendication 19, dans lequel les postes (10) de travail d'opérateur sont espacés le long de la chaîne (100) de traitement avec les postes (10) de travail situés sur les deux côtés de cette chaîne.

21. Système de manipulation de matériel selon l'une quelconque des revendications précédentes, dans lequel le système de manipulation de matériel se trouve sous la forme d'une chaîne (100) de traitement ayant une pluralité de postes séparés (10) de travail d'opérateur fournis le long de celle-ci, la chaîne (100) de traitement comportant une pluralité de mécanismes (26, 48, 62, 85) de transport montés l'un au-dessus de l'autre le long de sa longueur, les mécanismes de transport comportant au moins un mécanisme (26) de transport pour une distribution de lots de produit auxdits postes (10) de travail d'opérateur, et un mécanisme (62) de transport pour une distribution des conteneurs (61) d'emballage auxdits postes (10) de travail d'opérateur.

22. Système de manipulation de matériel selon l'une quelconque des revendications précédentes, dans lequel ledit poste (10) de travail d'opérateur comporte une plaque ouverte (17) de couverture, et dans lequel les conteneurs individuels (61) d'emballage sont distribués audit poste (10) de travail d'opérateur en dessous de ladite plaque (17) de couverture, de telle sorte qu'un opérateur peut remplir un dit conteneur distribué (61) à travers l'ouverture de plaque de couverture, un bord (67) dudit récipient (61) comprimant ladite plaque (17) de couverture autour de la périphérie de ladite ouverture.

23. Système de manipulation de matériel selon l'une quelconque des revendications précédentes, dans lequel ledit système de manipulation de matériel est un système de manipulation d'aliments.

24. Procédé de manipulation de matériel pour un produit destiné à être traité manuellement, **caractérisé par** les étapes consistant à :
fournir au moins un poste (10) de travail d'opérateur auquel un opérateur à la fois traite et emballe le produit ;
distribuer automatiquement des lots discrets (21) du produit audit poste (10) de travail d'opérateur pour un traitement manuel par l'opérateur, lesdits lots étant distribués sur une base « au besoin » ou « à la demande » en utilisant un moyen de distribution contrôlé par ordinateur selon un signal provenant du moyen au niveau du poste de travail qui détecte le moment où un lot de produit est nécessaire ; et
distribuer automatiquement des conteneurs individuels (61) d'emballage vers ledit poste (10) de travail d'opérateur pour remplir le produit traité par l'opérateur, lesdits conteneurs d'emballage étant distribués sur une base « au besoin » ou « à la demande » selon un signal provenant du moyen au niveau dudit poste de travail qui détermine le moment où un conteneur d'emballage est nécessaire.

25. Procédé de manipulation de matériel selon la revendication 24, comportant en outre l'étape consistant à répartir automatiquement chaque conteneur (61) d'emballage rempli de produit à partir du poste de travail sur une base « au besoin » ou « à la demande ».

26. Procédé de manipulation de matériel selon la revendication 24 ou revendication 25, dans lequel chaque lot de produit est acheminé dans un conteneur (21) de lot et le procédé comporte en outre l'étape consistant à répartir automatiquement le conteneur de lot à partir du poste de travail sur une base « au besoin » ou « à la demande ».
